Europäisches Patentamt

European Patent Office

Office européen des brevets

(19)

(11) Publication number: **0 196 234 B1**

(12) **EUROPEAN PATENT SPECIFICATION**

(45) Date of publication of patent specification: **05.08.92**  (51) Int. Cl.⁵: **H02B 1/24**, H02B 13/02

(21) Application number: **86302281.0**

(22) Date of filing: **26.03.86**

(54) **Gas insulated switchgear.**

(30) Priority: **26.03.85 JP 59590/85**

(43) Date of publication of application:
**01.10.86 Bulletin 86/40**

(45) Publication of the grant of the patent:
**05.08.92 Bulletin 92/32**

(84) Designated Contracting States:
**CH DE GB LI**

(56) References cited:
**EP-A- 0 094 871**
**FR-A- 1 121 097**

(73) Proprietor: **MITSUBISHI DENKI KABUSHIKI KAISHA**
**2-3, Marunouchi 2-chome Chiyoda-ku Tokyo 100(JP)**

(72) Inventor: **Yamauchi, Takao Itami Works, Mitsubishi Denki KK**
**1-1 Tsukaguchi Hon-machi 8-chome Amagasaki City Hyogo Pref.(JP)**

(74) Representative: **Lawson, David Glynne et al MARKS & CLERK 57-60 Lincoln's Inn Fields London WC2A 3LS(GB)**

Rank Xerox (UK) Business Services

**Description**

BACKGROUND OF THE INVENTION

This invention relates to a gas insulated switchgear.

In a conventional gas insulated switchgear, a system utilizing a current transformer is used for protecting the switchgear against grounding and short-circuiting. That is, the system in which a group of circuit breakers, for example, in the region to be protected are opened when the difference between the current flowing out from the region to be protected exceeds a predetermined value.

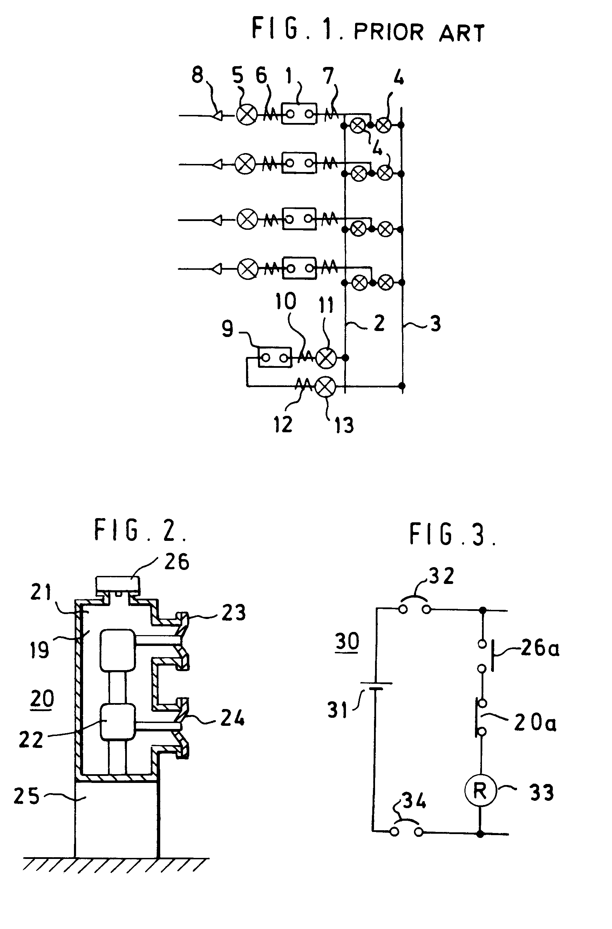

Fig. 1 is a schematic electrical connection diagram showing a conventional protective system. The illustrated system includes two bus conductors 2 and 3 between which four electrical paths each including two, series connected disconnectors 4 are connected. The junction between two disconnectors 4 of each parallel electrical path is connected to an electrical series circuit each including a circuit breaker 1 and a disconnector 5. A pair of current transformers 6 and 7 are disposed at both sides of the circuit breaker 1.

The illustrated system is connected to load circuits not shown through respective terminals 8. The system also comprises a series circuit connected across the bus conductors 2 and 3 and including a circuit breaker 9 and a current transformer 10 and a disconnector 11 on the one side and a current transformer 12 and a disconnector 13 on the other side.

When the region to be protected is assumed to be circuit breakers, current transformers 6 and 7 as well as 10 and 13 are disposed on both sides of circuit breakers 1 and arranged to detect the fact that a grounding or a short-circuit condition occurs on either side of the bus conductors 2 and 3, whereby the circuit breakers 1 associated with the line to be isolated are opened.

With the above conventional gas insulated switchgear, grounding or the like cannot be detected unless it is an electric current higher than a predetermined level, because of errors in the current transformer, and since the grounding or the like is detected by a current, erroneous operation or non-operation is involved, leading to a problem of a low reliability.

It is known to detect an electric arc within a circuit breaker, as a means of protecting the region containing that circuit breaker. EP-A-0094871 (CDN-B-1210847) discloses gas insulated switchgear comprising a gas-insulated circuit breaker, fault current detecting means for detecting a fault current flowing through the region to be protected and generating a first trip signal for activating trip means of said circuit breaker, electric arc detecting means disposed on the circuit breaker for detecting an electric arc generated within it and generating a second trip signal, and means for supplying said second trip signal to the trip means of a circuit breaker different from that in which the arc is generated and so placed as to isolate the circuit breaker within which the electric arc is generated.

This has the disadvantage that the arc generated in normal circuit breaker operation may trigger isolation of that circuit breaker.

An object of the present invention is to provide gas insulated switchgear comprising a highly reliable protective device which can reliably detect grounding or the like and is free from erroneous operation or non-operation.

According to the present invention, the switchgear includes control means for preventing said second trip signal from being supplied to the trip means of the different circuit breaker, when the circuit breaker in which the arc is generated is operated by a first trip signal from said fault current detecting means.

The gas insulated switchgear according to the present invention detects an electric arc generated within a switchgear vessel, and comprises a control circuit which provides a detection signal for activating isolating means to isolate the switchgear from the electric circuit and to maintain the isolating means in the inactivated state during the normal operation of the switchgear.

According to the present invention, when the switchgear is not being tripped by a fault current, the isolating means activates when the generation of an arc is detected, but when the switchgear is tripped by a fault current, the isolating means is blocked and the switchgear is not isolated even when an arc is generated during the switching operation of the switchgear.

The present invention will become more readily apparent from the following detailed description of the preferred embodiment of the invention taken in conjunction with the accompanying drawings, in which:

Fig. 1 is a partial electrical connection diagrem of a conventional gas insulated switchgear;

Fig. 2 is a vertical sectional view of one of the circuit breakers used in the gas insulated switchgear of the present invention; and

Fig. 3 is an electrical connection diagram of the control circuit of the gas insulated switchgear of the present invention.

Figs. 2 and 3 schematically illustrate one of the circuit breakers employed in the gas insulated switchgear of the present invention. The illustrated circuit breaker 20 comprises a hermetic vessel 21 which contains an electrically insulating gas 19. The vessel also contains a stationary and movable contacts assembly 22 electrically connected to an external circuit (not shown) through flange portions 23 and 24. The contact assembly 22 is mechanically connected to an operating mechanism 25 to be operated to open and close the contacts of the contact assembly 22 in response to the trip command. The circuit breaker 20 comprises an arc detector 26 for detecting an electric arc generated within the vessel 21 of the circuit breaker 20. The arc detector 26 may detect light emitted from the electric arc. Alternatively, the arc detector 26 may be a detector for detecting vibration of the vessel 21 or change in gas pressure within the vessel 21.

A control circuit 30 for each circuit breaker 20 shown in Fig. 3 is a series circuit comprising an electrical power source 31, an air circuit breaker 32, a contact 26a of the arc detector 26, an auxiliary contact 20a of the circuit breaker 20, a relay 33 and air circuit breaker 34. The contact 26a is a normally open contact and is closed when the arc detector 26 detects the generation of an arc. The contact 20a is a normally closed contact which is opened when the operating mechanism 25 of the circuit breaker 20 makes the contact opening movement. The relay 33 is connected to a predetermined further circuit breaker which must be tripped open when an arc is generated within the vessel of a first circuit breaker, to protect the first circuit breaker in which the arc is generated. The air circuit breakers 32 and 34 are normally closed.

It sometimes occurs that an electric arc is generated within an outer housing or hermetic vessel of switchgear such as the vessel 21 of the circuit breaker 20. Such an electric arc, is detected by an arc detector associated with the vessel within which the arc is generated, such as the arc detector 26 for the circuit breaker 20. The arc detector supplies an arc signal, which represents that an electric arc is generated within the vessel 21, to the normally open contact 26a of the control circuit 30 shown in Fig. 3 to close it. Since the contact 20a is closed at this time, the relay 33 is energized by the electric source 31 to supply a trip command to an unillustrated further circuit breaker which contributes to the isolation of the faulted circuit breaker 20 from the source side circuit to protect the circuit breaker 20 in which the arc is generated.

During this operation, the operating mechanism 25 of the faulted circuit breaker 20 in which the arc is generated does not make any motion, so that the normally closed contact 20a of the control circuit 30 is not opened.

When a ground fault or a short circuit fault occurs on the load side line in the electrical power system employing the gas insulated switchgear of the present invention, some of the current transformers 6, 7, 10 and 12 detect the abnormal current condition on the line on which the fault occurs. Then a predetermined circuit breaker in the system, which is so placed that it contributes to the protection of the line from the fault, is opened by a trip signal supplied in response to the detection of the fault current, thereby isolating and protecting the faulted line from the remaining circuit. This protective operation is identical to that of the conventional gas insulated switchgear.

When some of the circuit breakers which interrupt the fault current are opened, an electric arc is generated between the separated contacts within the hermetic vessel. This arc is detected by the arc detector 26 and the contact 26a of the control circuit 30 shown in Fig. 3 is closed. In order to prevent activation of the control circuit 30 under this condition, the operating mechanism 25 of the circuit breaker 20 is connected to the normally closed contact 20a of the control circuit 30 so that the contact 20a is opened when the operating mechanism 25 is making a contact opening motion. Accordingly, when the contact 20a is opened, the relay 33 of the control circuit 30 is not energized by the electric source 31 and the control circuit 30 is not activated to isolate the circuit breaker even when the contact 26a is closed by the arc signal from the arc detector 26.

As is apparent from the foregoing description, the control device for isolating the faulted circuit breaker by providing a trip signal to a further circuit breaker is activated by an arc signal from the arc detector which detects the arc within the hermetic vessel. During normal fault current interruption by the circuit breaker, the control circuit is inactivated by the contact opening motion of the operating mechanism of the circuit breaker. Therefore, the reliability in protecting various components in the gas insulated switchgear is increased and the cost can also be lowered.

**Claims**

1. A gas insulated switchgear comprising,
    at least two circuit breakers (20) for protecting the region to be protected, each circuit breaker including trip means (25) for opening the circuit breaker in response to a trip signal;
    respective hermetic vessels (21) hermetically enclosing therein said circuit breakers;
    an electrically insulating gas (19) disposed within said vessels for electrically insulating the circuit breakers;
    fault current detecting means (6, 7, 10, 12) for detecting a fault current flowing through the region to be protected and generating a first trip signal for activating said trip means of a said circuit breaker such as to protect the said region;
    electric arc detecting means (26) disposed on said hermetic vessel (21) for detecting an electric arc generated within said hermetic vessel and generating a second trip signal;

and means (33) for supplying said second trip signal to the trip means of a predetermined circuit breaker different from that in which the arc is generated and so placed as to isolate the circuit breaker within which the electric arc is generated; characterised by

control means (20a) for preventing said second trip signal from being supplied to the trip means of the different circuit breaker when the circuit breaker in which the arc is generated is operated by a first trip signal from said fault current detecting means.

**Revendications**

1. Appareillage de commutation à isolation gazeuse comprenant,

au moins deux disjoncteurs (20) destinés à protéger la région devant être protégée, chaque disjoncteur englobant un moyen de déclenchement (25) destiné à couper le disjoncteur en réponse à un signal de déclenchement;

des récipients hermétiques correspondants (21), renfermant hermétiquement lesdits disjoncteurs;

un gaz d'isolation électrique (19) contenu dans lesdits récipients en vue de l'isolation électrique des disjoncteurs;

des moyens de détection de courant de défaut (6, 7, 10, 12) pour détecter un courant de défaut traversant la région devant être protégée et engendrant un premier signal de déclenchement pour activer ledit moyen de déclenchement du dit disjoncteur, pour protéger ainsi ladite région;

un moyen de détection d'un arc électrique (26) agencé sur ledit récipient hermétique (21) pour détecter un arc électrique engendré dans ledit récipient hermétique et engendrant un deuxième signal de déclenchement;

ainsi qu'un moyen (33) pour fournir ledit deuxième signal de déclenchement au moyen de déclenchement d'un disjoncteur prédéterminé, différent de celui dans lequel est engendré l'arc et agencé de sorte à isoler le disjoncteur dans lequel est engendré l'arc électrique; caractérisé par

un moyen de contrôle (20a) empêchant que ledit deuxième signal de déclenchement ne soit fourni au moyen de déclenchement du disjoncteur différent lorsque le disjoncteur dans lequel l'arc est engendré est actionné par un premier signal de déclenchement du dit moyen de détection de déclenchement du courant de défaut.

**Patentansprüche**

1. Gasisolierte Schaltanlage, die folgendes aufweist:

wenigstens zwei Leistungsschalter (20), um den zu schützenden Bereich zu schützen, wobei jeder Leistungsschalter eine Auslöseeinrichtung (25) aufweist, um den Leistungsschalter aufgrund eines Auslösesignals zu öffnen;

jeweilige hermetische Behälter (21), die die Leistungsschalter hermetisch umschließen;

ein elektrisch isolierendes Gas (19), das in den Behältern vorgesehen ist, um die Leistungsschalter elektrisch zu isolieren;

Fehlerstromerfassungseinrichtungen (6, 7, 10, 12), um einen Fehlerstrom zu erfassen, der durch den zu schützenden Bereich fließt, und um ein erstes Auslösesignal zu erzeugen, um die Auslöseeinrichtung eines der Leistungsschalter derart zu aktivieren, daß er den genannten Bereich schützt;

eine Lichtbogenerfassungseinrichtung (26), die auf dem hermetischen Behälter (21) angeordnet ist, um einen Lichtbogen zu erfassen, der in dem hermetischen Behälter erzeugt wird, und um ein zweites Auslösesignal zu erzeugen;

und eine Einrichtung (33), um der Auslöseeinrichtung eines vorbestimmten Leistungsschalters, der von demjenigen, in dem der Lichtbogen erzeugt wird, verschieden ist, das zweite Auslösesignal zuzuführen, und die so angeordnet ist, daß sie den Leistungsschalter, in dem der Lichtbogen erzeugt wird, trennt; gekennzeichnet durch

eine Steuereinrichtung (20a), um zu verhindern, daß das zweite Auslösesignal der Auslöseeinrichtung des verschiedenen Leistungsschalters zugeführt wird, wenn der Leistungsschalter, in dem der Lichtbogen erzeugt wird, von einem ersten Auslösesignal der Fehlerstromerfassungseinrichtungen betätigt wird.

# FIG. 1. PRIOR ART

# FIG. 2.

# FIG. 3.